# DEMANDE DE BREVET EUROPEEN

(11) **EP 1 108 930 A1**
(43) Date de publication de la demande: **20.06.2001**
(21) Numéro de dépôt: 99870260.9
(22) Date de dépôt: 16.12.1999
(51) Int. Cl.: F16K 3/08

(54) **Organe de réglage du débit d'un fluide**

(71) Demandeur: Techspace Aero S.A., 4041 Herstal (BE)
(72) Inventeur: Delobel, Pierre, 4031 Angleur (BE)
(74) Mandataire: Van Malderen, Joelle

(57) **Abrégé**

La présente invention concerne un organe de réglage continu du débit d'un fluide comprenant au moins :
- un actionneur (13), et
- un élément (11) permettant le passage du fluide et comprenant un obturateur (12) mobile,
caractérisé en ce que l'élément (11) permettant le passage du fluide se présente sous la forme d'une enveloppe qui comprend en son sein l'obturateur (12) mobile et également l'actionneur (13).

## Description

### Objet de l'invention

La présente invention se rapporte à un organe de réglage du débit d'un fluide tel qu'une vanne.

Plus précisément, la présente invention se rapporte à un organe de réglage continu du débit d'un fluide.

### Etat de la technique

Les vannes, qui sont des organes de réglage du débit d'un fluide, sont utilisées dans toutes sortes de circuits pneumatiques et hydrauliques. Elles permettent de régler le débit d'un fluide en générant une perte de charge au sein dudit fluide à l'aide d'un obturateur mobile. Selon la position dudit obturateur mobile, on pourra générer une perte de charge plus ou moins importante.

Dans le cas où l'on désire obtenir un réglage continu du débit, de tels obturateurs mobiles seront pilotés par un actionneur qui peut être un moteur électrique ou un vérin, et dont la commande permettra d'obtenir une position stable dudit obturateur, et ceci quel que soit le déplacement souhaité.

Habituellement, les organes de réglage continu du débit d'un fluide sont composées d'un élément, appelé aussi conduit d'écoulement, permettant le passage dudit fluide et dans lequel l'obturateur mobile est placé, d'un actionneur qui permettra de commander cet obturateur mobile ainsi que d'un moyen d'accouplement de l'actionneur audit élément permettant le passage dudit fluide.

Cet accouplement est constitué par plusieurs pièces de liaison qui permettent d'agir sur l'obturateur. Des joints sont également prévus afin de confiner le fluide au niveau de cet obturateur. Ces joints doivent être compatibles avec le mouvement des différentes pièces de liaison.

La présence de tels joints pour assurer l'étanchéité des pièces mobiles de l'accouplement conduit à la présence de frottements parfois importants qui ont pour conséquence de dégrader la précision de l'organe de réglage ou de devoir utiliser un actionneur plus puissant.

En outre, de tels joints peuvent encore conduire à des fuites de fluide ou à un risque de défaillance du fait de leur présence même. La durée de vie d'une vanne utilisant de tels joints sera souvent limitée.

De plus, l'obligation d'accoupler le moteur électrique à l'obturateur mobile conduit souvent à une imprécision de la position de ce dernier organe, et de ce fait à un mauvais contrôle du réglage du débit du fluide.

Finalement, l'accouplement est souvent réalisé à l'aide de pièces de liaison coûteuses. En outre, la présence de ces pièces de liaison augmente l'encombrement et la masse dudit organe de réglage ou vanne.

### Buts de l'invention

La présente invention vise à proposer une solution qui remédie aux différents inconvénients présentés ci-dessus pour des organes de réglage continu du débit d'un fluide ou vannes selon l'état de la technique.

Plus précisément, la présente invention vise à proposer un organe de réglage continu du débit d'un fluide qui présente une masse et un encombrement réduits, et qui permet en outre d'atteindre une fiabilité et une précision optimisées.

A titre complémentaire, la présente invention vise à proposer un organe de réglage continu du débit d'un fluide qui présente une durée de vie accrue pour un coût réduit par rapport aux solutions de l'état de la technique.

La présente invention vise également à proposer un organe de réglage continu du débit d'un fluide qui présente une consommation électrique limitée.

Enfin, la présente invention vise à proposer un organe de réglage continu du débit d'un fluide qui permet son utilisation aussi bien dans le cas de pressions faibles que dans le cas de pression élevées ou très élevées.

### Principaux éléments caractéristiques de l'invention

La présente invention se rapporte à un organe de réglage continu du débit d'un fluide (ou vanne), comprenant au moins un actionneur et un élément permettant le passage du fluide qui comprend un obturateur mobile, caractérisé en ce que l'élément permettant le passage du fluide se présente sous la forme d'une enveloppe qui comprend ou englobe en son sein l'obturateur mobile et également l'actionneur.

De préférence, l'actionneur est un moteur électrique, de préférence un moteur rotatif sans balais, ou encore un vérin.

L'obturateur peut être directement assemblé sur l'actionneur, ou encore être assemblé sur un mécanisme de transmission lui-même piloté par l'actionneur. Dans ce dernier cas, le mécanisme de transmission est de préférence un réducteur de vitesse.

De préférence, un ou plusieurs capteurs de position sont également présents dans l'enveloppe.

De préférence, l'obturateur mobile est constitué par une grille mobile se déplaçant devant une grille fixe ou se présente sous la forme d'un papillon obturant progressivement une lumière.

### Brève description des figures

La figure 1 représente une vue en élévation d'un organe de réglage continu du débit d'un fluide selon l'état de la technique.

La figure 2 représente une vue en coupe longitudinale d'un organe de réglage continu du débit d'un fluide selon la présente invention.

La figure 3 représente une section de détail selon le plan C-C de la figure 2.

### Description détaillée d'un organe de réglage continu du débit d'un fluide selon l'état de la technique

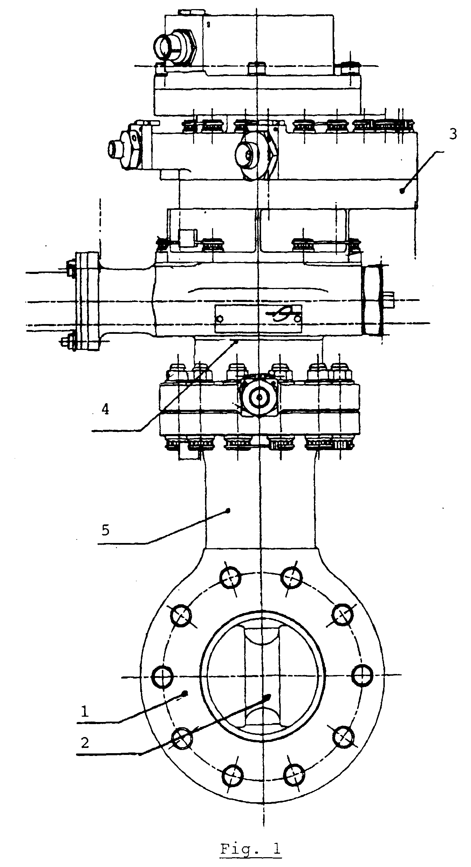

Un tel organe de réglage continu du débit d'un fluide selon l'état de la technique est représenté à la figure 1. Cet organe est composé classiquement :
- d'un élément de passage du fluide (1) permettant de guider l'écoulement dudit fluide,
- d'un obturateur (2) mobile placé dans l'élément de passage du fluide (1),
- d'un moteur (3) qui joue le rôle d'actionneur et qui commande le mouvement de l'obturateur (2), et
- de pièces de liaison (4) qui assurent l'accouplement de l'obturateur (2) au moteur (3).

Dans ce dispositif, le fluide est confiné au niveau de l'obturateur (2) par des joints (5) compatibles avec le mouvement des pièces de liaison (4).

### Description détaillée d'une forme d'exécution préférée de la présente invention

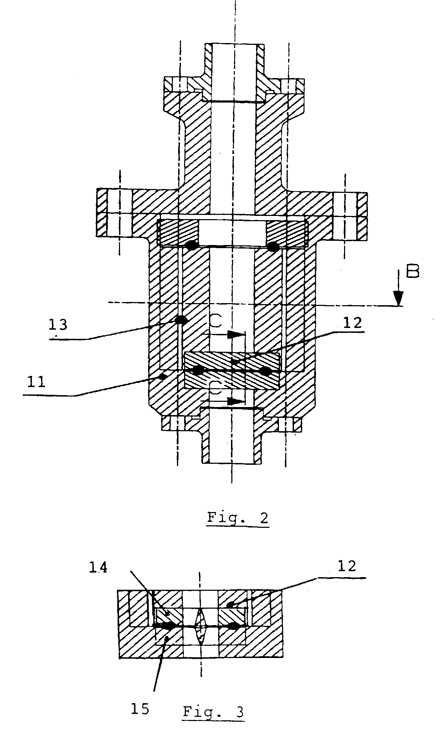

Une forme d'exécution préférée de l'invention est représentée aux figures 2 et 3. Dans cette forme, l'organe de réglage continu du débit d'un fluide comporte un élément de passage du fluide (11) qui permet de guider l'écoulement du fluide et qui correspond à une enveloppe à l'intérieur de laquelle se trouve un moteur rotatif sans balais (13) et un obturateur mobile (12) directement assemblé sur le moteur (13).

La figure 3 détaille la structure dudit obturateur mobile (12) en section selon le plan C-C. Cet obturateur mobile est composé d'une grille mobile (14) et d'une grille fixe (15), la grille mobile (14) étant capable de se déplacer devant la grille fixe (15). La grille mobile (14) est fixée au rotor du moteur rotatif tandis que la grille fixe est fixée au corps de vanne, de sorte que le mouvement de rotation de la grille mobile (14) est directement commandée par le mouvement du rotor, d'où une plus grande précision et une plus grande fiabilité au niveau du réglage continu du débit du fluide par rapport aux solutions proposées dans l'état de la technique. Une étude a montré que la position de l'obturateur (12) devait être connue à un degré près.

L'organe de réglage du débit selon la présente invention peut être utilisé quelles que soient les conditions de pression. Avantageusement, il peut être utilisé dans des conditions de pression particulièrement élevées (pouvant atteindre plusieurs dizaines de MPa). En effet, étant donné que le moteur équipant cette vanne est en équipression avec le fluide, l'organe de réglage du débit selon l'invention garantit une bonne sécurité, même dans des conditions de pression où l'étanchéité du système est pourtant particulièrement difficile à réaliser. En particulier, des expériences ont montré que l'organe de réglage du débit selon l'invention pouvait supporter une pression de 20 MPa.

La durée de vie de l'organe ne sera pas non plus dépendante de la durée de vie des joints mais plutôt de la durée de vie du moteur. En outre, comme le moteur présente une durée de vie de plusieurs millions de cycles tandis que les joints ne présentent une durée de vie que de plusieurs milliers de cycles, on pourra de manière particulièrement avantageuse augmenter la durée de vie globale de la vanne, en particulier si les conditions d'utilisation ne sont pas trop sévères pour le moteur.

De même, en proposant une solution selon la présente invention, on peut réduire la masse et l'encombrement de l'organe d'un facteur deux à trois par rapport aux solutions présentées dans l'état de la technique. A titre d'exemple, la masse du dispositif selon la forme d'exécution préférée de l'invention telle que réalisée est de 8kg et la longueur de la vanne est de 160 mm.

Enfin, un avantage supplémentaire de l'organe de réglage continu du débit d'un fluide est que son utilisation requiert une consommation électrique limitée. La consommation électrique pour un organe de réglage réalisé selon la forme préférée d'exécution de l'invention n'est ainsi que de 20 W.

## Revendications

1. Organe de réglage continu du débit d'un fluide comprenant au moins :
- un actionneur (13), et
- un élément (11) permettant le passage du fluide et comprenant un obturateur (12) mobile,
caractérisé en ce que l'élément (11) permettant le passage du fluide se présente sous la forme d'une enveloppe qui comprend en son sein l'obturateur (12) mobile et également l'actionneur (13).

2. Organe de réglage selon la revendication 1, caractérisé en ce que l'actionneur est un moteur électrique, de préférence un moteur rotatif sans balais.

3. Organe de réglage selon la revendication 1, caractérisé en ce que l'actionneur est un vérin.

4. Organe de réglage selon l'une quelconque des revendications précédentes, caractérisé en ce que l'obturateur (12) est en liaison directe avec l'actionneur (13).

5. Organe de réglage selon l'une quelconque des revendications 1 à 3, caractérisé en ce que l'obturateur est assemblé sur un mécanisme de transmission lui-même piloté par l'actionneur.

6. Organe de réglage selon la revendication 5, caractérisé en ce que le mécanisme de transmission est un réducteur de vitesse.

7. Organe de réglage selon l'une quelconque des revendications précédentes, caractérisé en ce qu'au moins un capteur de position est présent dans l'enveloppe.

8. Organe de réglage selon l'une quelconque des revendications précédentes, caractérisé en ce que l'obturateur mobile est constitué par une grille mobile (14) se déplaçant devant une grille fixe (15).

9. Organe de réglage selon l'une quelconque des revendications 1 à 7, caractérisé en ce que l'obturateur mobile se présente sous la forme d'un papillon obturant progressivement une lumière.
